# EUROPEAN PATENT APPLICATION

(11) **EP 1 724 318 A1**
(43) Date of publication of application: **22.11.2006**
(21) Application number: 05719794.9
(22) Date of filing: 02.03.2005
(51) Int. Cl.: C09J 5/00, C09J 123/16, B29C 65/48, B29C 65/70, C08J 5/12, B29K 21/00, C08L 21/00

(54) **METHOD FOR ADHESIVE-BONDING VULCANIZED RUBBER COMPOSITIONS BY THE USE OF THERMOPLASTIC ELASTOMER COMPOSITIONS**

(30) Priority: 09.03.2004 JP 2004065921
(71) Applicant: THE YOKOHAMA RUBBER CO., LTD., Tokyo 105-8685 (JP)
(72) Inventor: KAKUBO, Takashi c/o The Yokohama Rubber Co., Ltd., Hiratsuka City, Kanagawa 2548601 (JP); CHINO, Keisuke c/o The Yokohama Rubber Co., Ltd., Hiratsuka City, Kanagawa 2548601 (JP)
(74) Representative: Vossius & Partner
(86) International application number: PCT/JP2005/003479
(87) International publication number: WO 2005/085377

(57) **Abstract**

An object of the present invention is to provide a method of adhering a vulcanized rubber composition using a thermoplastic elastomer composition capable of maintaining recycling property and excellent in adhesiveness. The above object is achieved by the following method of adhering a vulcanized rubber composition. A method of adhering a vulcanized rubber composition of the present invention is a method of adhering a vulcanized rubber composition using a thermoplastic elastomer composition. The thermoplastic elastomer composition contains a thermoplastic elastomer and a filler. The thermoplastic elastomer has: a monomer unit forming a rubber component of the vulcanized rubber composition on at least part of its main chain; and a side chain containing a structure represented by a predetermined structural formula, the structure having a carbonyl group and an imino group, and/or a nitrogen-containing heterocyclic ring. The method includes adhering a first member and a second member each composed of the vulcanized rubber composition through the thermoplastic elastomer composition.

## Description

### Technical Field

The present invention relates to a method of adhering a vulcanized rubber composition using a thermoplastic elastomer composition.

### Background Art

In general, a rubber product such as a weather strip or a glass run has been produced by: cutting an extruded vulcanized molded product composed of a rubber composition; setting the cut product into a die from one or both of the sides of the mold; injecting a similar rubber molded material into a cavity; and subjecting the resultant to vulcanization molding.

However, such vulcanization molding takes a long time to vulcanize a vulcanized molded product and a similar rubber molded material, and involves a problem, that is, the absence of recycling property because an adhesion portion cannot be dismantled.

A method involving adhesion by means of a thermoplastic elastomer without vulcanization molding has been known as a method of solving such problem, and a known example of such thermoplastic elastomer includes "a thermoplastic elastomer composition to be used for forming a fused surface skin or fused molded product for a vulcanized molded product composed of a rubber blend of an ethylene-propylene-nonconjugated diene terpolymer (EPDM), including: a thermoplastic elastomer; and an ethylene/1-octene copolymer to be blended with the thermoplastic elastomer in an amount of 5 to 45 parts by weight with respect to 100 parts by weight of the thermoplastic elastomer, the thermoplastic elastomer composition being characterized in that: the ethylene/1-octene copolymer has an 1-octene content of 10 to 30 mass%; and the molecular weight distribution M_{w}/Mₙ of the polymer is in the range of 1.0 to 3.5" (see Patent Document 1).

Patent Document 1: JP-A-09-40814

### Disclosure of the Invention

### Problems to be Solved by the Invention

However, the adhesiveness of the thermoplastic elastomer composition described in Patent Document 1 above may reduce because its physical properties such as hardness, modulus, and processability may be reduced by adding a filler or a plasticizer.

Therefore, an object of the present invention is to provide a method of adhering a vulcanized rubber composition using a thermoplastic elastomer composition capable of maintaining recycling property and excellent in adhesiveness.

### Means to Solve the Problems

In view of the above, the inventors of the present invention have made extensive studies to achieve the above object. As a result, they have found that the use of a specific thermoplastic elastomer composition for adhering members each composed of a vulcanized rubber composition maintains recycling property and provides excellent adhesiveness, thereby completing the present invention. That is, the present invention provides a method of adhering a vulcanized rubber composition using a thermoplastic elastomer composition according to any one of the following items (I) to (XIV).

(I) A method of adhering a vulcanized rubber composition using a thermoplastic elastomer composition, the thermoplastic elastomer composition containing a thermoplastic elastomer and a filler, and the thermoplastic elastomer having: a monomer unit forming a rubber component of the vulcanized rubber composition on at least part of its main chain; and a side chain containing a structure represented by the following formula (1) and/or a nitrogen-containing heterocyclic ring, the method including adhering a first member and a second member each composed of the vulcanized rubber composition through the thermoplastic elastomer composition.

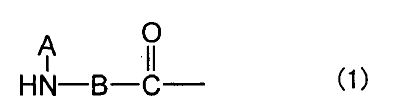

In the formula, A represents an alkyl group having 1 to 30 carbon atoms, an aralkyl group having 7 to 20 carbon atoms, or an aryl group having 6 to 20 carbon atoms, and B represents: a single bond; an oxygen atom, an amino group NR' (R' represents a hydrogen atom or an alkyl group having 1 to 10 carbon atoms.), or a sulfur atom; or an organic group which may contain any one of these atoms or groups.

(II) The method of adhering a vulcanized rubber composition according to the above item (I), in which the adhesion is performed by: applying the thermoplastic elastomer composition in a state of being molten (a molten state) to the surface/surfaces of the first member and/or the second member to be adhered; and subjecting the resultant to contact bonding.

(III) The method of adhering a vulcanized rubber composition according to the above item (I), in which the adhesion is performed by injecting or extruding the thermoplastic elastomer composition in a state of being molten into a space between the first member and the second member.

(IV) The method of adhering a vulcanized rubber composition according to the above item (I), in which the adhesion is performed by: sandwiching a sheet-like product composed of the thermoplastic elastomer composition between the surfaces of the first member and the second member to be adhered; and subjecting the resultant to contact bonding under heat at a temperature equal to or higher than the temperature at which the sheet-like product melts.

(V) The method of adhering a vulcanized rubber composition according to any one of the above items (I) to (IV), in which the side chain containing a structure represented by the formula (1) contains a structure represented by the following formula (2) or (3) that binds to a main chain at a position α or β.

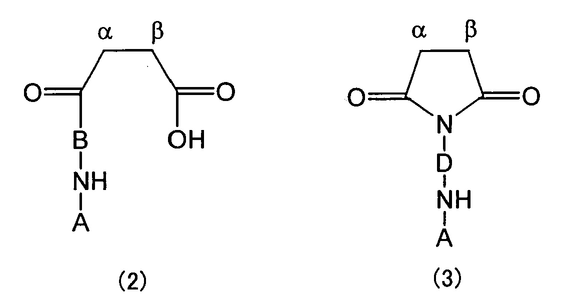

In the formula, A represents an alkyl group having 1 to 30 carbon atoms, an aralkyl group having 7 to 20 carbon atoms, or an aryl group having 6 to 20 carbon atoms, and B and D each independently represent: a single bond; an oxygen atom, an amino group NR' (R' represents a hydrogen atom or an alkyl group having 1 to 10 carbon atoms.), or a sulfur atom; or an organic group which may contain any one of these atoms or groups.

(VI) The method of adhering a vulcanized rubber composition according to any one of the above items (I) to (V), in which the side chain containing a nitrogen-containing heterocyclic ring contains a structure represented by the following formula (4).

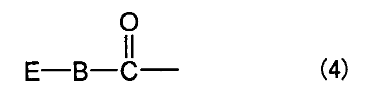

In the formula, E represents a nitrogen-containing heterocyclic ring, and B represents: a single bond; an oxygen atom, an amino group NR' (R' represents a hydrogen atom or an alkyl group having 1 to 10 carbon atoms.), or a sulfur atom; or an organic group which may contain any one of these atoms or groups.

(VII) The method of adhering a vulcanized rubber composition according to the above item (VI), in which the side chain containing a nitrogen-containing heterocyclic ring contains a structure represented by the following formula (5) or (6) that binds to a main chain at a position α or β.

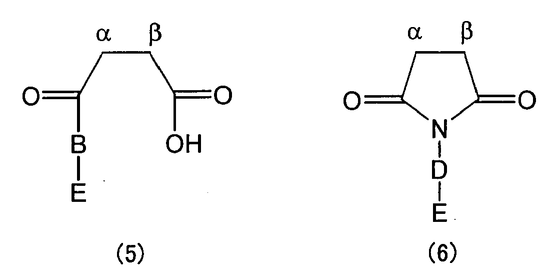

In the formula, E represents a nitrogen-containing heterocyclic ring, and B and D each independently represent: a single bond; an oxygen atom, an amino group NR' (R' represents a hydrogen atom or an alkyl group having 1 to 10 carbon atoms.), or a sulfur atom; or an organic group which may contain any one of these atoms or groups.

(VIII) The method of adhering a vulcanized rubber composition according to any one of the above items (I) to (VII), in which the nitrogen-containing heterocyclic ring is a five- or six-membered ring.

(IX) The method of adhering a vulcanized rubber composition according to the above item (VIII), in which the nitrogen-containing heterocyclic ring is a triazole ring, a thiadiazole ring, a thiazole ring, a pyridine ring, an imidazole ring, or a hydantoin ring.

(X) The method of adhering a vulcanized rubber composition according to any one of the above items (I) to (IX), in which the monomer unit forming a rubber component of the vulcanized rubber composition is at least one kind selected from the group consisting of ethylene, propylene, isoprene, and butadiene, and a unit similar to the at least one kind is on at least part of the main chain of the thermoplastic elastomer.

(XI) The method of adhering a vulcanized rubber composition according to the above item (X), in which: the rubber component of the vulcanized rubber composition is an ethylene-propylene-nonconjugated diene terpolymer (EPDM); and the thermoplastic elastomer has an ethylene unit and a propylene unit on at least part of its main chain.

(XII) The method of adhering a vulcanized rubber composition according to the above item (XI), in which an elastomeric polymer constituting the main chain of the thermoplastic elastomer is an ethylene-propylene copolymer (EPM) or an ethylene-propylene- nonconjugated diene terpolymer (EPDM), or a mixture of them.

(XIII) The method of adhering a vulcanized rubber composition according to any one of the above items (I) to (XII), in which a difference between the ethylene content (mass%) of the rubber component of the vulcanized rubber composition and the ethylene content (mass%) of the thermoplastic elastomer is 25 mass% or less.

(XIV) The method of adhering a vulcanized rubber composition according to any one of the above items (I) to (XIII), in which the thermoplastic elastomer composition contains 1 to 100 parts by mass of the filler with respect to 100 parts by mass of the thermoplastic elastomer.

### Effects of the Invention

As described below, the present invention is useful because the present invention can provide a method of adhering a vulcanized rubber composition using a thermoplastic elastomer composition capable of maintaining recycling property and excellent in adhesiveness.

### Best Mode for Carrying Out the Invention

Hereinafter, the present invention will be described in detail.
A method of adhering a vulcanized rubber composition using a thermoplastic elastomer composition of the present invention (hereinafter simply referred to as the "adhesion method of the present invention") is a method of adhering a vulcanized rubber composition using a specific thermoplastic elastomer composition to be detailed later, the method including adhering a first member and a second member each composed of the vulcanized rubber composition through the thermoplastic elastomer composition.

The adhesion method of the present invention involves the utilization of not a solvent but a heat fusion phenomenon of a thermoplastic elastomer composition.
Specific examples of a preferable method in the case where at least one of the first member and the second member is not fixed include: a method involving applying the thermoplastic elastomer composition turned in a molten state by heating to the surface/surfaces of the first member and/or the second member to be adhered and subjecting the members to contact bonding; and a method involving sandwiching a sheet-like product composed of the thermoplastic elastomer composition between the surfaces of the first member and the second member to be adhered and subjecting the members to contact bonding under heat at the temperature at which the sheet-like product melts.
Specific examples of a preferable method in the case where the first member and the second member are fixed so as to be out of contact with each other include: a method involving injecting or extruding the thermoplastic elastomer composition turned in a molten state by heating into a gap between the members and subjecting the members to contact bonding after the injection or extrusion as required; and a method involving inserting the thermoplastic elastomer composition into a gap between the members and subjecting the members to contact bonding under heating at the temperature at which the thermoplastic elastomer composition melts.

Any one of contact bonding, contact bonding under heating , and injection can be adopted to favorably adhere the members serving as adherends when the members each have a smooth surface shape such as a sheet-like shape. On the other hand, when the members each have a surface shape such as a complicated convexo-concave shape, injection is preferably adopted because the members can be adhered more easily than in the case of contact bonding and an adhesion effect comparable to that of contact bonding can be obtained. Therefore, the adhesion method of the present invention preferably involves injection in various situations where a vulcanized rubber composition is actually used for producing parts (such as packings, window frames, and hoses).

The term "contact bonding" as used herein refers to the adhesion of the surfaces of the first and second members to be adhered by means of pressing through the thermoplastic elastomer composition, while the term " contact bonding under heating" as used herein refers to the contact bonding while heating is performed.
As described above, the term "injection" refers to a method involving filling a gap between the first and second members with the thermoplastic elastomer composition molten by heating in the case where the members are fixed so as to be out of contact with each other. The injection involves the use of means for adhering the members at a sufficient injection pressure. The term "injection pressure" refers to the pressure to be generated in a molding machine for injecting a molten thermoplastic elastomer composition.
In addition, the term "extrusion" refers to a method involving filling a gap between the first and second members with the thermoplastic elastomer composition molten by heating with the aid of, for example, the rotation of a screw. The extrusion involves the use of means for adhering the members at an extrusion pressure at the time of extrusion.

In addition, a sheet-like product composed of the thermoplastic elastomer composition, which is obtained by, for example, the rolling of the thermoplastic elastomer composition, has a thickness (sheet thickness) of 0.1 to 10 mm, or preferably 0.5 to 5 mm.

In the present invention, a pressing pressure at the time of the contact bonding can be adjusted depending on the kind of vulcanized rubber composition constituting each member. For example, the contacting pressure is not particularly limited as long as 1 kPa or more when the rubber component of the vulcanized rubber composition is EPDM, and is preferably 0.1 MPa to 10 MPa.
In addition, in the present invention, the time required for the contact bonding (contact bonding time) is not particularly limited, but is preferably about 1 to 5 minutes in terms of excellent workability and excellent adhesiveness.
In addition, in the present invention, the temperature required for the contact bonding (contact bonding temperature) is preferably 150 to 220°C, or more preferably 180 to 200°C in terms of adhesion efficiency.
It should be noted that the heating involved in the contact bonding under heating, that is, the temperature at which the sheet-like product composed of the thermoplastic elastomer composition or the thermoplastic elastomer melts is about 150 to 220°C.

In the present invention, an injection pressure at the time of the injection can be adjusted depending on the kind of vulcanized rubber composition constituting each member. For example, the injection pressure is not particularly limited as long as 0.1 MPa or more when the rubber component of the vulcanized rubber composition is EPDM, and is preferably 0.5 MPa to 10 MPa.
In addition, in the present invention, a pressure at the time of the extrusion can be adjusted depending on the kind of vulcanized rubber composition constituting each member. For example, the pressure is not particularly limited as long as 0.1 MPa or more when the rubber component of the vulcanized rubber composition is EPDM, and is preferably 0.5 MPa to 20 MPa.

Next, the vulcanized rubber composition and the thermoplastic elastomer composition to be used for the adhesion method of the present invention will be described in detail.

### <Vulcanized rubber composition>

The vulcanized rubber composition to be used for the adhesion method of the present invention is not particularly limited as long as it is a vulcanized rubber composition obtained by vulcanizing an unvulcanized rubber composition containing a rubber component and a filler.
In the present invention, a monomer unit forming the rubber component preferably has at least one kind selected from the group consisting of ethylene, propylene, isoprene, and butadiene.
Specific examples of such rubber component include: diene rubbers such as natural rubber (NR), isoprene rubber (IR), butadiene rubber (BR), 1,2-butadiene rubber, styrene-butadiene rubber (SBR), acrylonitrile-butadiene rubber (NBR), and EPDM, and hydrogenated products of the rubbers; and olefin rubbers such as EPM, ethylene-acrylic rubber (AEM), ethylene-butene rubber (EBM), polyethylene rubber, and polypropylene rubber.
Of those, EPDM, EPM, and EBM are preferable, and EPDM is more preferable.

In the present invention, each of the above rubber components may be used alone, or two or more of them may be used in combination. A mixing ratio when two or more of them are used in combination can be an arbitrary ratio depending on, for example, applications where the vulcanized rubber composition is used and physical properties requested for the vulcanized rubber composition.

Specific examples of the filler include carbon black, silica, iron oxide, zinc oxide, aluminum oxide, titanium oxide, barium oxide, magnesium oxide, calcium carbonate, magnesium carbonate, zinc carbonate, agalmatolite clay, kaolin clay, and calcined clay.
The content of the filler is not particularly limited, and is 10 to 200 parts by mass, or preferably 50 to 120 parts by mass with respect to 100 parts by mass of the rubber component as required.

An unvulcanized rubber composition is generally vulcanized by: adding a vulcanizer, and, as required, a vulcanization assistant, a vulcanization accelerator, a vulcanization retardant, and the like to the rubber composition; and heating the mixture to 120 to 200°C, or preferably 140 to 190°C, but a method for the vulcanization is not particularly limited to this method.
Examples of such vulcanizer include sulfur, organic peroxide, and metal oxide vulcanizers, a phenol resin, and quinone dioxime.
Specific examples of the sulfur vulcanizer include powdered sulfur, precipitated sulfur, high-dispersible sulfur, surface-treated sulfur, insoluble sulfur, dimorpholine disulfide, and alkyl phenol disulfide.
Specific examples of the organic peroxide vulcanizer include benzoyl peroxide, t-butylhydro peroxide, 2,4-dichlorobenzoyl peroxide, 2,5-dimethyl-2,5-di(t-butylperoxy)hexane, and 2,5-dimethylhexane-2,5-di(peroxylbenzoate).
Other vulcanizers include magnesium oxide, litharge (lead oxide), p-quinone dioxime, tetrachloro-p-benzoquinone, p-dibenzoyl quinone dioxime, poly-p-dinitrosobenzene, and methylenedianiline.

Specific examples of the vulcanization assistant include: zinc oxide; magnesium oxide; amines; aliphatic acids such as acetic acid, propionic acid, butanoic acid, stearic acid, acrylic acid, and maleic acid; and zinc salts of aliphatic acids such as zinc acetate, zinc propionate, zinc butanoate, zinc stearate, zinc acrylate, and zinc maleate.
Specific examples of the vulcanization accelerator include: thiuram vulcanization accelerators such as tetramethylthiuram disulfide (TMTD) and tetraethylthiuram disulfide (TETD); aldehyde-ammonia vulcanization accelerators such as hexamethylenetetramine; guanidine vulcanization accelerators such as diphenyl guanidine; thiazole vulcanization accelerators such as 2-mercaptobenzothiazole and dibenzothiazole disulfide (DM); and sulfenamide vulcanization accelerators such as N-cyclohexyl-2-benzothiazyl sulfenamide and N-t-butyl-2-benzothiazyl sulfenamide. An alkyl phenol resin or a halide thereof can also be used.
Specific examples of the vulcanization retardant include: organic acids such as phthalic anhydride, benzoic acid, salicylic acid, and acetylsalicylic acid; nitroso compounds such as polymers of N-nitroso-diphenylamine, N-nitroso-phenyl-β-naphthylamine, and N-nitroso-trimethyldihydroquinoline; halides such as trichlormelanine; 2-mercaptobenzimidazole; and N-(cyclohexylthio)phthalimide (Santoguard PVI).
The total content of the vulcanizer, vulcanization assistant, vulcanization accelerator, vulcanization retardant, and the like is not particularly limited, but is preferably 0.1 to 20 parts by mass, or more preferably 1 to 10 parts by mass with respect to 100 parts by mass of the unvulcanized rubber composition.

### <Thermoplastic elastomer composition>

The thermoplastic elastomer composition to be used for the adhesion method of the present invention is a composition containing a thermoplastic elastomer and a filer to be described later, and contains 1 to 100 parts by mass, or preferably 5 to 50 parts by mass of the filler with respect to 100 parts by mass of the thermoplastic elastomer. A content of the filler in the above range is preferable because the adhesion method of the present invention for which a thermoplastic elastomer composition to be obtained is used provides good adhesiveness and improves a strength after adhesion. A content of the filler in the above range is preferable because the rubber physical properties (including hardness and modulus) of the thermoplastic elastomer composition to be obtained can be easily adjusted.
Hereinafter, the thermoplastic elastomer and the filler constituting the thermoplastic elastomer composition will be described in detail.

The thermoplastic elastomer constituting the thermoplastic elastomer composition has: a unit similar to the monomer unit forming the rubber component of the vulcanized rubber composition on at least part of an elastomeric polymer of a natural polymer or of a synthetic polymer forming a main chain; and a side chain containing a structure represented by the formula (1) and/or a nitrogen-containing heterocyclic ring.
The term "side chain" as used herein refers to any one of the side chains and terminals of an elastomeric polymer. In addition, the phrase "having a side chain containing a structure represented by the formula (1) and/or a nitrogen-containing heterocyclic ring" refers to a state where at least one of the structure represented by the formula (1) and the nitrogen-containing heterocyclic ring forms a chemically stable bond (such as a covalent bond or an ionic bond) with an atom (generally a carbon atom) forming the main chain of the elastomeric polymer.

The elastomeric polymer serving as the main chain of the thermoplastic elastomer is not particularly limited as long as it is a generally known natural polymer or synthetic polymer, has a glass transition point of room temperature (25°C) or lower (that is, the elastomeric polymer is an elastomer), and has the monomer unit forming the rubber component of the vulcanized rubber composition on at least part thereof.
As in the case of the rubber component of the vulcanized rubber composition described above, specific examples of such elastomeric polymer include: diene rubbers such as NR, IR, BR, 1,2-butadiene rubber, SBR, NBR, and EPDM, and hydrogenated products of the rubbers; and olefin rubbers such as EPM, AEM, EBM, polyethylene rubber, and polypropylene rubber.
Of those, each of EPM and EPDM each having an ethylene unit and a propylene unit is preferable because it provides the thermoplastic elastomer and the thermoplastic elastomer composition (which may hereinafter be simply referred to as the "thermoplastic elastomer (composition)") with good heat resistance and good weatherability.

The elastomeric polymer may also be an elastomeric polymer containing a resin component, and specific examples of such polymer include polystyrene elastomeric polymers (such as SBS, SIS, and SEBS), polyolefin elastomeric polymers, polyvinyl chloride elastomeric polymers, polyurethane elastomeric polymers, polyester elastomeric polymers, and polyamide elastomeric polymers which may be hydrogenated.

Furthermore, the elastomeric polymer may be a liquid or a solid, and its molecular weight is not particularly limited and may be appropriately selected depending on, for example, applications where the thermoplastic elastomer (composition) are used and physical properties requested for the elastomer and the elastomer composition.
The elastomeric polymer is preferably a liquid when emphasis is placed on the fluidity upon heating (decrosslinking) of the thermoplastic elastomer (composition). For example, a diene rubber such as isoprene rubber or butadiene rubber has a weight average molecular weight of preferably 1,000 to 100,000, or more preferably about 1,000 to 50,000.
The elastomeric polymer is preferably a solid when emphasis is placed on the strength of the thermoplastic elastomer (composition). For example, a diene rubber such as isoprene rubber or butadiene rubber has a weight average molecular weight of preferably 100,000 or more, or more preferably about 500,000 to 1,500,000.
In the present invention, the weight average molecular weight is a weight average molecular weight (in terms of polystyrene) measured by means of gel permeation chromatography (GPC). Tetrahydrofuran (THF) is preferably used for the measurement as a solvent.

In the present invention, two or more kinds of the elastomeric polymers may be used as a mixture. A mixing ratio of the respective elastomeric polymers in this case can be an arbitrary ratio depending on, for example, applications where the thermoplastic elastomer (composition) are used and physical properties requested for the thermoplastic elastomer (composition).
As described above, the glass transition point of the elastomeric polymer is preferably 25°C or lower. When the elastomeric polymer has two or more glass transition points or when two or more kinds of the elastomeric polymers are used as a mixture, at least one of the glass transition points is preferably 25°C or lower. A glass transition point of the elastomeric polymer in the above range is preferable because a molded product composed of the thermoplastic elastomer (composition) shows rubber-like elasticity at room temperature.
In the present invention, the glass transition point is a glass transition point measured by means of differential scanning calorimetry (DSC). A rate of temperature increase is preferably set to 10°C/min.

In the present invention, for example, the amount of bound styrene in the styrene-butadiene rubber (SBR) and the hydrogenation ratio of the elastomeric polymer or the like are not particularly limited, and can be adjusted to arbitrary values depending on, for example, applications where the thermoplastic elastomer (composition) are used and physical properties requested for the thermoplastic elastomer (composition).

The thermoplastic elastomer has a side chain containing a structure represented by the following formula (1) and/or a nitrogen-containing heterocyclic ring on the elastomeric polymer.

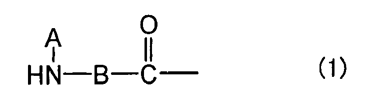

In the formula, A represents an alkyl group having 1 to 30 carbon atoms, an aralkyl group having 7 to 20 carbon atoms, or an aryl group having 6 to 20 carbon atoms, and B represents: a single bond; an oxygen atom, an amino group NR' (R' represents a hydrogen atom or an alkyl group having 1 to 10 carbon atoms.), or a sulfur atom; or an organic group which may contain any one of these atoms or groups.

The substituent A is not particularly limited as long as it is any one of the above-described alkyl group having 1 to 20 carbon atoms, aralkyl group having 7 to 20 carbon atoms, and aryl group having 6 to 20 carbon atoms.
Specific examples of such substituent A include: linear alkyl groups such as a methyl group, an ethyl group, a propyl group, a butyl group, a pentyl group, an octyl group, a dodecyl group, and a stearyl group; branched alkyl groups such as an isopropyl group, an isobutyl group, an s-butyl group, a t-butyl group, an isopentyl group, a neopentyl group, a t-pentyl group, a 1-methylbutyl group, a 1-methylheptyl group, and a 2-ethylhexyl group; aralkyl groups such as a benzyl group and a phenethyl group; and aryl groups such as a phenyl group, an (o-, m-, or p-) tolyl group, a dimethylphenyl group, and a mesityl group.
Of those, an alkyl group, especially a butyl group, an octyl group, a dodecyl group, an isopropyl group, or a 2-ethylhexyl group is preferable because the processability of the thermoplastic elastomer (composition) to be obtained becomes good.

The substituent B is not particularly limited as long as it is: a single bond; an oxygen atom, an amino group NR' (R' represents a hydrogen atom or an alkyl group having 1 to 10 carbon atoms.), or a sulfur atom; or an organic group which may contain any one of these atoms or groups.
Specific examples of such substituent B include: a single bond; an oxygen atom, a sulfur atom, or an amino group NR' (R' represents a hydrogen atom or an alkyl group having 1 to 10 carbon atoms); an alkylene or aralkylene group having 1 to 20 carbon atoms which may contain any one of these atoms or groups; an alkylene ether (alkylene oxy group such as a -O-CH₂CH₂- group), alkylene amino (such as a -NH-CH₂CH₂- group), or alkylene thioether group (alkylene thio group such as a -S-CH₂CH₂- group) having 1 to 20 carbon atoms, the group having any one of these atoms or groups at a terminal thereof; and an aralkylene ether (aralkylene oxy group), aralkylene amino, or aralkylene thioether group having 1 to 20 carbon atoms, the group having any one of these atoms or groups at a terminal thereof.

Examples of the alkyl group having 1 to 10 carbon atoms in the amino group NR' include a methyl group, an ethyl group, a propyl group, a butyl group, a pentyl group, a hexyl group, a heptyl group, an octyl group, a nonyl group, and a decyl group including their isomers.
An oxygen atom, a sulfur atom, and an amino group NR' of the substituent B, and an oxygen atom, an amino group NR', and a sulfur atom of an alkylene ether, alkylene amino, alkylene thioether, aralkylene ether, aralkylene amino, or aralkylene thioether group having 1 to 20 carbon atoms, the group having any one of these atoms or groups at a terminal thereof, are preferably combined with adjacent carbonyl groups to form conjugate ester, amide, imide, thioester, and like other groups.
Of those, the substituent B is preferably: an oxygen atom, a sulfur atom, or an amino group; or an alkylene ether, alkylene amino, or alkylene thioether group having 1 to 20 carbon atoms, the group having any one of these atoms or groups at a terminal thereof, and is particularly preferably an amino group (NH), an alkylene amino group (a -NH-CH₂- group, a -NH-CH₂CH₂- group, or a -NH-CH₂CH₂CH₂₋group), or an alkylene ether group (a -O-CH₂- group, a -O-CH₂CH₂- group, or a -O-CH₂CH₂CH₂- group).

The thermoplastic elastomer preferably has the side chain containing the structure represented by the formula (1) as a side chain containing a structure represented by the following formula (2) or (3) that binds to a main chain at a position α or β.

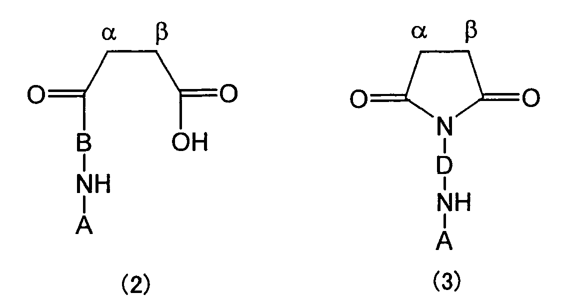

In the formula, A represents an alkyl group having 1 to 30 carbon atoms, an aralkyl group having 7 to 20 carbon atoms, or an aryl group having 6 to 20 carbon atoms, and B and D each independently represent: a single bond; an oxygen atom, an amino group NR' (R' represents a hydrogen atom or an alkyl group having 1 to 10 carbon atoms.), or a sulfur atom; or an organic group which may contain any one of these atoms or groups.

Here, the substituent A is basically identical to the substituent A in the formula (1), and the substituents B and D are each independently identical to the substituent B in the formula (1).
It should be noted that the substituent D in the formula (3) is preferably: a single bond; or one forming a conjugate system with imide nitrogen of an alkylene or aralkylene group having 1 to 20 carbon atoms which may contain an oxygen atom, an amino group NR', or a sulfur atom out of those exemplified for the substituent B in the formula (1), and is particularly preferably an alkylene group. That is, the substituent D preferably forms an alkylene amino or aralkylene amino group (particularly preferably, an alkylene amino group) having 1 to 20 carbon atoms which may contain an oxygen atom, an amino group NR', or a sulfur atom with the imide nitrogen in the formula (3).
Specific examples of such substituent D include: a single bond; an alkylene ether, alkylene amino, alkylene thioether, aralkylene ether, aralkylene amino, or aralkylene thioether group having 1 to 20 carbon atoms, the group having any one of the above-described oxygen atom, sulfur atom, and amino group at a terminal thereof; and a methylene, ethylene, propylene, butylene, hexylene, phenylene, or xylylene group including an isomer thereof.

The side chain containing a structure represented by any one of the formulae (1), (2), and (3) is preferably introduced at a rate (introduction rate) of 0.1 to 50 mol% with respect to 100 mol% of a monomer constituting the elastomeric polymer. A rate of less than 0.1 mol% may provide insufficient strength at the time of crosslinking, while a rate in excess of 50 mol% may increase a crosslink density to lose rubber elasticity. When the introduction rate is in the above range, an intermolecular or intramolecular interaction between side chains of the elastomeric polymer occurs, so the structures are formed in a balanced manner. As a result, the tensile strength of the thermoplastic elastomer (composition) to be obtained at the time of crosslinking is high, so excellent adhesiveness, excellent recycling property, and a good compression set can be obtained. The side chain is introduced at a rate of more preferably 0.1 to 30 mol%, or still more preferably 0.5 to 20 mol% because those properties become more excellent.

Furthermore, as described above, the thermoplastic elastomer has a side chain containing a nitrogen-containing heterocyclic ring instead of or in addition to a side chain containing a structure represented by any one of the formulae (1), (2), and (3).
In the present invention, the nitrogen-containing heterocyclic ring is introduced in the main chain of the elastomeric polymer directly or through an organic group.

The nitrogen-containing heterocyclic ring may contain a hetero atom except a nitrogen atom such as a sulfur atom, an oxygen atom, or a phosphorus atom in a heterocyclic ring as long as it contains a nitrogen atom in the heterocyclic ring. Here, a heterocyclic compound is used because the presence of a heterocyclic ring structure strengthens a hydrogen bond for forming a crosslink, so the tensile strength of the thermoplastic elastomer (composition) to be obtained increases to provide excellent adhesiveness.
In addition, the nitrogen-containing heterocyclic ring may have a substituent, and specific examples of the substituent include: an alkyl group such as a methyl group, an ethyl group, an (iso)propyl group, or a hexyl group; an alkoxy group such as a methoxy group, an ethoxy group, or an (iso)propoxy group; a group composed of a halogen atom such as a fluorine atom, a chlorine atom, a bromine atom, or an iodine atom; a cyano group; an amino group; an aromatic hydrocarbon group; an ester group; an ether group; an acyl group; and a thioether group. Those groups may be used in combination. The substitution positions of those substituents are not particularly limited, and the number of substituents is not limited either.
Furthermore, the nitrogen-containing heterocyclic ring may or may not have aromaticity, but preferably has aromaticity because the tensile strength of the thermoplastic elastomer (composition) to be obtained at the time of crosslinking additionally increases to additionally improve adhesiveness.

The nitrogen-containing heterocyclic ring is preferably a five-membered or six-membered ring.
Specific examples of such nitrogen-containing heterocyclic ring include pyrrololine, pyrrolidone, oxyindole (2-oxyindole), indoxyl (3-oxyindole), dioxyindole, isatin, indolyl, phthalimidine, β-isoindigo, monoporphyrin, diporphyrin, triporphyrin, azaporphyrin, phthalocyanine, hemoglobin, uroporphyrin, chlorophyll, phylloerythrine, imidazole, pyrazole, triazole, tetrazole, benzimidazole, benzopyrazole, benzotriazole, imidazoline, imidazolone, imidazolidone, hydantoin, pyrazoline, pyrazolone, pyrazolidone, indazole, pyridoindole, purine, cinnoline, pyrrole, pyrroline, indole, indoline, oxylindole, carbazole, phenothiazine, indolenine, isoindole, oxazole, thiazole, isoxazole, isothiazole, oxadiazole, thiadiazole, oxatriazole, thiatriazole, phenanthroline, oxazine, benzoxazine, phthalazine, pteridine, pyrazine, phenazine, tetrazine, benzoxazole, benzoisoxazole, anthranil, benzothiazole, benzofurazan, pyridine, quinoline, isoquinoline, acridine, phenanthridine, anthrazoline, naphthyridine, thiazine, pyridazine, pyrimidine, quinazoline, quinoxaline, triazine, histidine, triazolidine, melamine, adenine, guanine, thymine, cytosine, and derivatives of them. Of those, preferable examples of the nitrogen-containing five-membered ring include the following compounds, an imidazole derivative represented by the following formula (7), and a triazole derivative represented by the following formula (8). Each of those rings may have any one of the above-described various substituents, or hydrogen may be added to or eliminated from the ring.

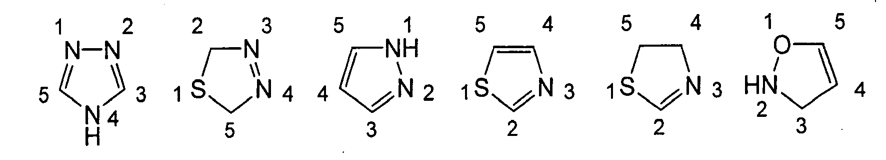

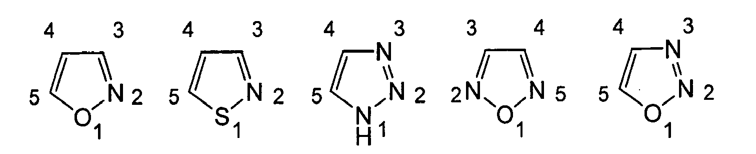

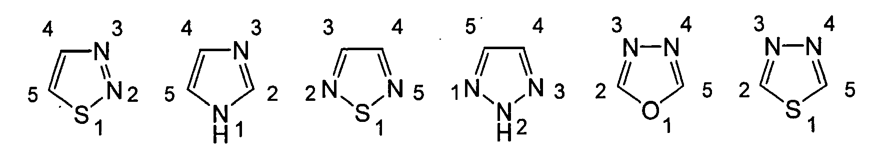

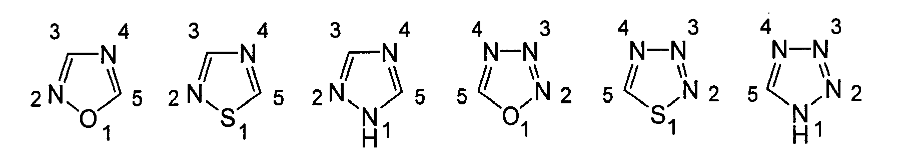

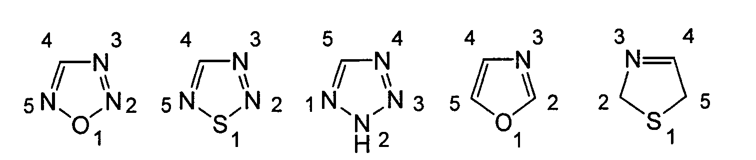

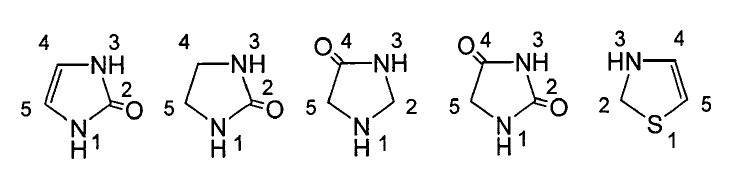

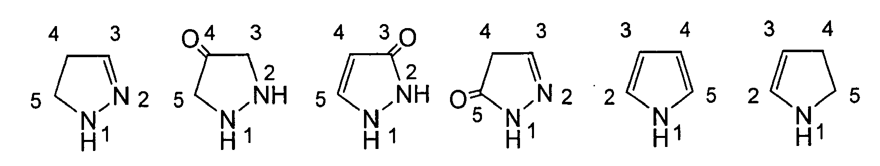

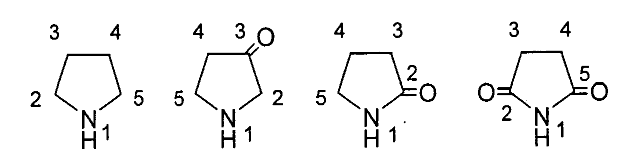

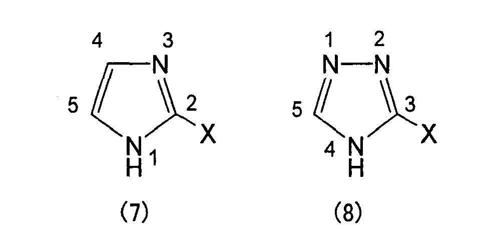

In the formulae, the substituent X is an alkyl group having 1 to 30 carbon atoms, an aralkyl group having 7 to 20 carbon atoms, or an aryl group having 6 to 20 carbon atoms, and is basically identical to the substituent A in the formula (1).

Preferable examples of the nitrogen-containing six-membered ring include the following compounds. Each of those compounds may have any one of the above-described various substituents, or hydrogen may be added to or eliminated from the compound.

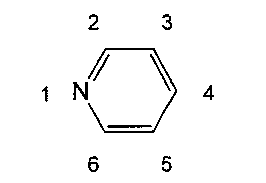

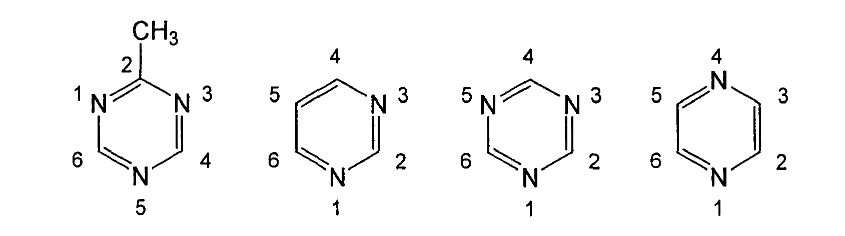

A product as a result of condensation between the nitrogen-containing heterocyclic ring and a benzene ring or between nitrogen-containing heterocyclic rings may also be used. Specific preferable examples thereof include the following condensed rings. Each of those condensed rings may have any one of the above-described various substituents, or a hydrogen atom may be added to or eliminated from the condensed ring.

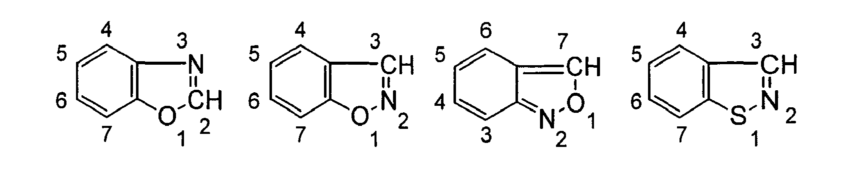

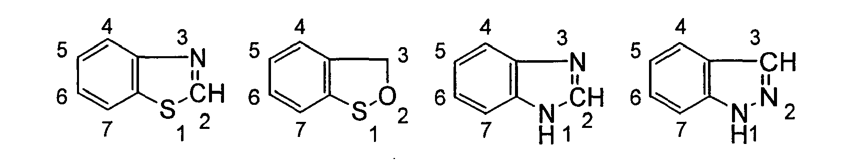

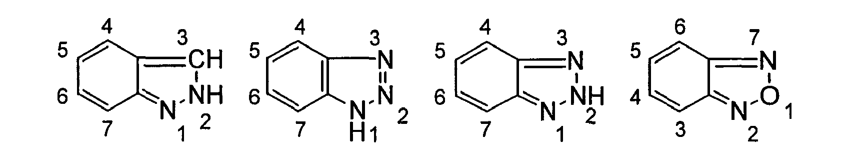

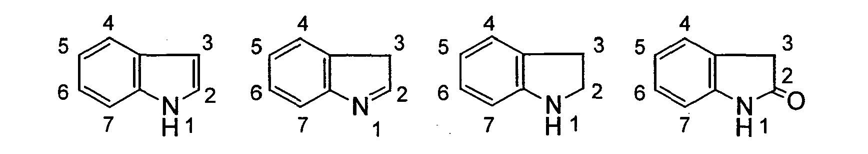

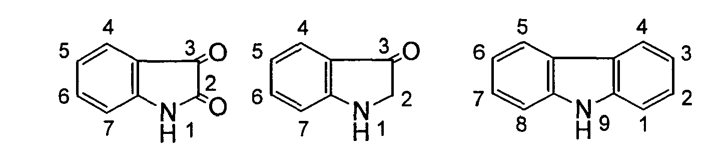

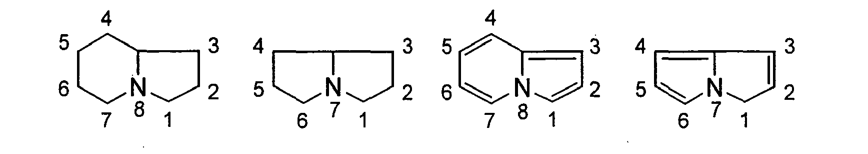

Of such nitrogen-containing heterocyclic rings, a triazole ring, a pyridine ring, a thiazole ring, a thiadiazole ring, an imidazole ring, or a hydantoin ring is preferable because the recycling property, compression set, mechanical strength, and hardness of the thermoplastic elastomer (composition) to be obtained are excellent.

When the thermoplastic elastomer has the side chain containing the nitrogen-containing heterocyclic ring, it preferably has the side chain as a side chain containing a structure represented by the following formula (4), or more preferably has the side chain as a side chain containing a structure represented by the following formula (5) or (6) that binds to a main chain at a position α or β.

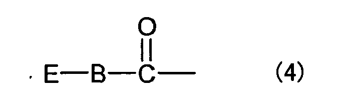

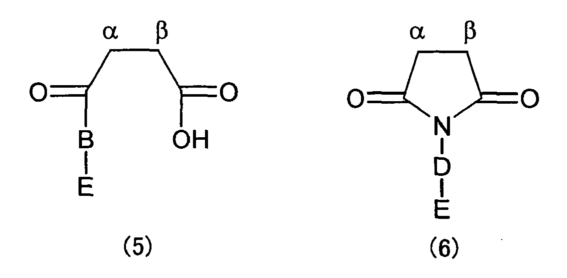

In the formula, E represents a nitrogen-containing heterocyclic ring, and B and D each independently represent: a single bond; an oxygen atom, an amino group NR' (R' represents a hydrogen atom or an alkyl group having 1 to 10 carbon atoms.), or a sulfur atom; or an organic group which may contain any one of these atoms or groups.

Specific examples of the nitrogen-containing heterocyclic ring E include the nitrogen-containing heterocyclic rings exemplified above.
In addition, the substituents B and D are each independently identical to the substituent B in the formula (1).
It should be noted that the substituent D in the formula (6) is preferably: a single bond; or one forming a conjugate system with imide nitrogen of an alkylene or aralkylene group having 1 to 20 carbon atoms which may contain an oxygen atom, an amino group NR', or a sulfur atom, and is particularly preferably a single bond. That is, the substituent D preferably forms an alkylene amino or aralkylene amino group having 1 to 20 carbon atoms which may contain an oxygen atom, an amino group NR', or a sulfur atom with the imide nitrogen in the formula (6), and it is particularly preferable that a nitrogen-containing heterocyclic ring directly bind to the imide nitrogen in the formula (6) (single bond).

The side chain containing a containing a nitrogen-containing heterocyclic ring is preferably introduced at a rate (introduction rate) of 0.1 to 50 mol% with respect to 100 mol% of a monomer constituting the elastomeric polymer. When the thermoplastic elastomer has the side chain containing a nitrogen-containing heterocyclic ring in addition to the side chain containing a structure represented by any one of the formulae (1), (2), and (3), in all, the side chain containing a nitrogen-containing heterocyclic ring and the side chain containing a structure represented by any one of the formulae (1), (2), and (3) are preferably introduced at a total rate (introduction rate) of 0.1 to 50 mol% with respect to 100 mol% of the monomer constituting the elastomeric polymer. An introduction ratio of those side chains (the side chain containing a nitrogen-containing heterocyclic ring/the side chain containing a structure represented by any one of the formulae (1), (2), and (3)) is more preferably 1/99 to 99/1, or still more preferably 10/90 to 90/10.
The introduction rate and the introduction ratio are preferably within the above ranges because mechanical strength such as tensile strength can be additionally improved and the staining of the thermoplastic elastomer (composition) resulting from the nitrogen-containing heterocyclic ring to be introduced can be suppressed while the property described in the paragraph [0062], that is, the property in which "the tensile strength at the time of crosslinking is high, so excellent adhesiveness, excellent recycling property, and a good compression set can be obtained" is maintained.

The thermoplastic elastomer preferably has a glass transition point of 25°C or lower. When the thermoplastic elastomer has two or more glass transition points or when two or more kinds of thermoplastic elastomers are used in combination, at least one of the glass transition points is preferably 25°C or lower. A glass transition point of 25°C or lower causes a molded product composed to show rubber-like elasticity at room temperature.

A method of producing the thermoplastic elastomer is not particularly limited, and any one of the ordinary methods can be selected. To be specific, a preferable production method includes the step of causing a compound capable of introducing an imino group to react with an elastomeric polymer containing a cyclic acid anhydride group at a side chain thereof (hereinafter simply referred to as the "reaction step A").
In addition, when the thermoplastic elastomer has the side chain containing a nitrogen-containing heterocyclic ring instead of the side chain containing a structure represented by any one of the formulae (1), (2), and (3), the method of producing the thermoplastic elastomer is preferably a production method including the step of causing a compound capable of introducing a nitrogen-containing heterocyclic ring to react with an elastomeric polymer containing a cyclic acid anhydride group at a side chain thereof (hereinafter simply referred to as the "reaction step B").
Furthermore, when the thermoplastic elastomer has the side chain containing a nitrogen-containing heterocyclic ring in addition to the side chain containing a structure represented by any one of the formulae (1), (2), and (3), the method of producing the thermoplastic elastomer is preferably a production method including the reaction step A and the reaction step B. In this case, the method may include the reaction step B as a step to be performed simultaneously with the reaction step A. Alternatively, the method may include the reaction step B as a step to be performed prior to or after the reaction step A. However, the method preferably includes the reaction step B as a step to be performed prior to the reaction step A.

The term "elastomeric polymer containing a cyclic acid anhydride group at a side chain thereof" as used herein refers to an elastomeric polymer in which an cyclic acid anhydride group forms a chemically stable bond (a covalent bond) with an atom forming the main chain of the elastomeric polymer. Such elastomeric polymer is obtained by causing the above elastomeric polymer and a compound capable of introducing a cyclic acid anhydride group to react with each other.
Specific examples of the compound capable of introducing a cyclic acid anhydride group include cyclic acid anhydrides such as succinic anhydride, maleic anhydride, glutaric anhydride, and phthalic anhydride.

The elastomeric polymer containing a cyclic acid anhydride group at a side chain thereof may be produced by means of a method to be generally performed (for example, a method involving causing a cyclic acid anhydride to undergo graft polymerization with the above elastomeric polymer under typical conditions (such as stirring under heating)), or may be a commercial product.
Examples of the commercial product include: maleic anhydride-modified isoprene rubber such as LIR-403 (manufactured by KURARAY CO., LTD.) or LIR-410A (a prototype of KURARAY CO., LTD.); modified isoprene rubber such as LIR-410 (manufactured by KURARAY CO., LTD.); carboxy- modified nitrile rubber such as Crinack 110, 221, or 231 (manufactured by Polyser Co.,Ltd.); carboxy-modified polybutene such as CPIB (manufactured by Nippon Petrochemicals Co.,Ltd.) or HRPIB (a prototype of the laboratory of Nippon Petrochemicals Co.,Ltd.); maleic anhydride- modified ethylene-propylene rubber such as Nucrel (manufactured by DU PONT-MITSUI POLYCHEMICALS CO., LTD.), Yukaron (manufactured by Mitsubishi Chemical Corporation), or Toughmer M (such as MA8510 (manufactured by Mitsui Chemicals, Inc.)); maleic anhydride- modified ethylene-butene rubber such as Toughmer M (such as MH7020 (manufactured by Mitsui Chemicals, Inc.)); maleic anhydride- modified polyethylene such as ADTX series (such as maleic anhydride- modified EVA or maleic anhydride-modified EMA (manufactured by Nippon Polyolefin)) HPR series (such as maleic anhydride- modified EEA or maleic anhydride- modified EVA (manufactured by DU PONT-MITSUI POLYCHEMICALS CO., LTD.)), Bondfast series (maleic anhydride- modified EMA (manufactured by Sumitomo Chemical Co., Ltd.)), Dumilan series (maleic anhydride- modified EVOH (manufactured by Takeda Pharmaceutical Company Limited)), Bondine (maleic anhydride- modified EEA (manufactured by ATOFINA)), Tuftec (maleic anhydride-modified SEBS, M1943 (manufactured by Asahi Kasei Corporation)), Kraton (maleic anhydride- modified SEBS, FG1901X (manufactured by Kraton Polymer)), Toughprene (maleic anhydride- modified SBS, 912 (manufactured by Asahi Kasei Corporation)), Septon (maleic anhydride- modified SEPS (manufactured by KURARAY CO., LTD.)), Lexpearl (maleic anhydride- modified EEA, ET-182G, 224M, or 234M (manufactured by Nippon Polyolefin)), or Auroren (maleic anhydride- modified EEA, 200S or 250S (manufactured by NIPPON PAPER CHEMICALS CO.,LTD.); and maleic anhydride-modified polypropylene (such as QB550 or LF128 (manufactured by Mitsui Chemicals, Inc.).

The compound capable of introducing an imino group is not particularly limited as long as it is a compound having an imino group not constituting part of a cyclic compound such as a heterocyclic ring and any other active hydrogen group (such as a hydroxyl group, a thiol group, or an amino group) in a molecule, and specific examples thereof include: alkyl aminoalcohols such as N-methylmethanolamine, N-ethylethanolamine, N-n-propylethanolamine, N-n-butylethanolamine, N-n-pentylethanolamine, N-n-hexylethanolamine, N-n-heptylethanolamine, N-n-octylethanolamine, N-n-nonylethanolamine, N-n-decylethanolamine, N-n-undecylethanolamine, N-n-dodecylethanolamine, N-(2-ethylhexyl)ethanolamine, N-methylaminopropanol, and N-methylaminobutanol; aromatic aminoalcohols such as N-phenylaminoethanol, N-toluilaminoethanol, N-phenylaminopropanol, and N-phenylaminobutanol; alkyl aminothiols such as N-methylaminoethanethiol, N-ethylaminoethanethiol, N-n-propylaminoethanethiol, N-n-butylaminoethanethiol, N-methylaminopropanethiol, and N-methylaminobutanethiol; aromatic aminothiols such as N-phenylaminoethanethiol, N-toluilaminoethanethiol, N-phenylaminopropanethiol, and N-phenylaminobutanethiol; alkyl diamines such as N-methylethylenediamine, N-ethylethylenediamine, N-n-propylethylenediamine, N-methylpropanediamine, N-ethylpropanediamine, N-methylbutanediamine, N,N'-dimethylethylenediamine, and N,N'-diethylethylenediamine; and aromatic diamines such as N-phenylethylenediamine, N-phenylpropanediamine, N-phenylbutanediamine, and N,N'-diphenylethylenediamine.
Of those, N-n-butylethanolamine, N-n-octylethanolamine, or N-n-dodecylethanolamine is preferable.

The reaction step A is a step involving: mixing a compound capable of introducing an imino group and the elastomeric polymer containing a cyclic acid anhydride group at a side chain thereof; causing them to react with each other (subjecting the cyclic acid anhydride group to ring-opening) at the temperature at which the compound and the cyclic acid anhydride group chemically bind to each other (for example, 80 to 200°C). The reaction allows the thermoplastic elastomer to be obtained to contain a structure represented by the formula (2) or (3) at a side chain thereof.
The compound capable of introducing an imino group may be caused to react the part or whole of the cyclic acid anhydride groups present at the side chains of the elastomeric polymer. The term "part" means preferably 1 mol% or more, more preferably 50 mol% or more, or particularly preferably 80 mol% or more with respect to 100 mol% of the cyclic acid anhydride groups. With the range, high physical properties (such as breaking property) are sufficiently exerted. The whole of the cyclic acid anhydride groups (100 mol%) are particularly preferably caused to react with the compound capable of introducing an imino group because an excellent compressive set can be obtained.

The compound capable of introducing a nitrogen-containing heterocyclic group may be any one of the nitrogen-containing heterocyclic rings themselves exemplified above, or may be a nitrogen-containing heterocyclic ring having a substituent (such as a hydroxyl group, a thiol group, or an amino group) capable of reacting with a cyclic acid anhydride group such as maleic anhydride.

The reaction step B is a step involving: mixing a compound capable of introducing a nitrogen-containing heterocyclic ring and the elastomeric polymer containing a cyclic acid anhydride group at a side chain thereof; causing them to react with each other (subjecting the cyclic acid anhydride group to ring-opening) at the temperature at which the compound and the cyclic acid anhydride group chemically bind to each other (for example, 80 to 200°C). The reaction allows the thermoplastic elastomer to be obtained to contain a structure represented by the formula (5) or (6) at a side chain thereof.
In addition, as described above, the reaction step B is preferably a step to be performed prior to the reaction step A when the method includes both the reaction step A and the reaction step B. In this case, the compound capable of introducing a nitrogen-containing heterocyclic ring may be caused to react part of the cyclic acid anhydride groups present at the side chains of the elastomeric polymer. The term "part" means preferably 1 to 99 mol%, more preferably 1 to 90 mol%, or particularly preferably 50 to 90 mol% with respect to 100 mol% of the cyclic acid anhydride groups. With the range, an effect of introducing the nitrogen-containing heterocyclic ring is exerted, and mechanical strength such as tensile strength at the time of crosslinking is additionally improved.

In the above production method, the respective groups (structures) at the side chains of the thermoplastic elastomer, that is, an unreacted cyclic acid anhydride group, and the structures each represented by any one of the formulae (2), (3), (5), and (6) can be identified by means of analysis means to be generally used such as NMR or IR spectrum.

The bonding position of the nitrogen-containing heterocyclic ring when the thermoplastic elastomer has the side chain containing the nitrogen-containing heterocyclic ring will be described. The nitrogen-containing heterocyclic ring is represented as a "nitrogen-containing n-membered compound (n ≥ 3)" for convenience.
The bonding position ("any one of the positions 1 to n") to be described later is based on the IUPAC nomenclature system. For example, in the case of a compound having three nitrogen atoms each having an unshared electron pair, the bonding position is determined depending on a rank based on the IUPAC nomenclature system. To be specific, the bonding position is shown in the nitrogen-containing heterocyclic ring of any one of the five-membered, six-membered, and condensed rings exemplified above.
In the thermoplastic elastomer, the bonding position of a nitrogen-containing n-membered compound that binds to a copolymer directly or through an organic group is not particularly limited, and any one of the bonding positions (positions 1 to n) can be adopted. The bonding site is preferably any one of the position 1 and the positions 3 to n.

When a nitrogen-containing compound contains one nitrogen atom (for example, a pyridine ring), a chelate tends to be formed in a molecule, so physical properties such as tensile strength when the compound is provided as a composition become excellent. Accordingly, the position is preferably any one of the positions 3 to (n - 1).
Selecting the bonding position of the nitrogen-containing n-membered compound tends to allow a crosslink due to a hydrogen bond, ion bond, coordination bond, or the like to be formed between molecules of the thermoplastic elastomer. Therefore, excellent recycling property and excellent mechanical properties can be obtained.

In the present invention, each of such thermoplastic elastomers may be used alone, or two or more of them may be used in combination. A mixing ratio when two or more of them are used in combination can be an arbitrary ratio depending on, for example, applications where the thermoplastic elastomer composition is used and physical properties requested for the thermoplastic elastomer composition.

As in the case of the vulcanized rubber composition described above, specific examples of the filler constituting the thermoplastic elastomer composition include carbon black, silica, iron oxide, zinc oxide, aluminum oxide, titanium oxide, barium oxide, magnesium oxide, calcium carbonate, magnesium carbonate, zinc carbonate, agalmatolite clay, kaolin clay, and calcined clay.
Of those, carbon black and/or silica are/is preferably used.

The kind of carbon black is appropriately selected depending on applications. In general, carbon blacks are classified into hard carbon and soft carbon depending on particle sizes. The soft carbon shows low reinforcing property on rubber, while the hard carbon shows high reinforcing property on rubber. In the present invention, the hard carbon showing high reinforcing property is particularly preferably used.

Silica is not particularly limited, and specific examples thereof include fumed silica, calcined silica, precipitated silica, pulverized silica, molten silica, and diatomaceous earth.
When silica is used as the filler, a silane coupling agent can be used in combination therewith. Examples of the silane coupling agent include bis(triethoxysilylpropyl)tetrasulfide (Si69), bis(triethoxysilylpropyl)disulfide (Si75), γ-mercaptopropyltrimethoxysilane, and vinyltrimethoxysilane. An aminosilane coupling agent to be described later can also be used.

As described above, the content of such filler is 1 to 100 parts by mass, or preferably 5 to 50 parts by mass with respect to 100 parts by mass of the thermoplastic elastomer. The content of the filler is not limited to the above range when a softener (such as paraffin oil, process oil, a petroleum resin, or vegetable oil) is used because the content can be additionally increased.

In the present invention, the thermoplastic elastomer composition may contain any one of various additives as required to the extent that the object of the present invention is not impaired. Examples of the additives include: a polymer except the above thermoplastic elastomer; a filler having an amino group introduced thereinto (hereinafter simply referred to as the "amino group-introduced filler"); an amino group-containing compound except the amino group-introduced filler; a compound containing a metal element (hereinafter simply referred to as the "metal salt"); a maleic anhydride-modified polymer; an age inhibitor; an antioxidant; a pigment (dye); a plasticizer; a thixotropy imparting agent; a UV absorber; a flame retardant; a solvent; a surfactant (including a leveling agent); a dispersant; a dehydrating agent; a rust inhibitor; an adhesiveness imparting agent; an antistatic agent; and a filler.

The above additives may be those generally used, and specific examples thereof include, but not limited to, the following additives.
The polymer except the above thermoplastic elastomer is preferably a polymer having a glass transition point of 25°C or lower by reason of the foregoing. Specific examples thereof include NR, IR, BR, 1,2-butadiene rubber, SBR, NBR, IIR, EPDM, EPM, AEM, and EBM. In particular, a polymer having no unsaturated bond such as IIR, EPM, or EBM, or a polymer having a small amount of unsaturated bond (such as EPDM) is preferable. A polymer having a site that can form a hydrogen bond is also preferable, and examples thereof include polyester, polylactone, and polyamide.
One or two or more kinds of the polymers except the above thermoplastic elastomer may be incorporated into the thermoplastic elastomer composition, and the (total) content of the polymer(s) is preferably 0.1 to 100 parts by mass, or more preferably 1 to 50 parts by mass with respect to 100 parts by mass of the thermoplastic elastomer.

Examples of a filler to serve as a base substance for the amino group-introduced filler (which may hereinafter be simply referred to as the "filler to serve as a base substance") include the fillers exemplified above as fillers that can be added to the vulcanized rubber as desired. Silica, carbon black, or calcium carbonate is preferable in terms of the ease with which an amino group is introduced and the ease with which the adjustment or the like of an introduction rate (introduction rate) is performed, and silica is more preferable.

An amino group to be introduced into the filler to serve as a base substance (which may hereinafter be simply referred to as the "amino group") is not particularly limited, and specific examples thereof include an aliphatic amino group, an aromatic amino group, an amino group constituting a heterocyclic ring, and a mixed amino group containing multiple of these amino groups.
Here, in the present invention, an amino group possessed by an aliphatic amine compound is referred to as an aliphatic amino group, an amino group bound to an aromatic group possessed by an aromatic amine compound is referred to as an aromatic amino group, and an amino group possessed by a heterocyclic amine compound is referred to as a heterocyclic amino group.
Of those, a heterocyclic amino group, a mixed amino group containing a heterocyclic amino group, or an aliphatic amino group is preferable because it can appropriately interact with the thermoplastic elastomer to be effectively dispersed into the thermoplastic elastomer, and a heterocyclic amino group or an aliphatic amino group is more preferable.

The amino group may be any one of the primary (-NH₂), secondary (an imino group or >NH), tertiary (>N-), and quaternary (>N⁺<) amino groups without any particular limitation.
When the amino group is a primary amino group, an interaction with the thermoplastic elastomer tends to be strong, so the elastomer may be gelled depending on, for example, the conditions under which a composition is prepared. On the other hand, when the amino group is a tertiary amino group, an interaction with the thermoplastic elastomer tends to be weak, so an improving effect on a compression set or the like is small when the elastomer is provided as a composition.
From such viewpoint, the amino group is preferably a primary or secondary amino group, and is more preferably a secondary amino group.

That is, the amino group is preferably a heterocyclic amino group, a mixed amino group containing a heterocyclic amino group, or a primary or secondary aliphatic amino group, and is particularly preferably a heterocyclic amino group or a primary or secondary aliphatic amino group.

The filler to serve as a base substance has only to have at least one such amino group on its surface, but preferably has multiple such amino groups because an excellent improving effect on a compression set or the like can be obtained when a composition is prepared.

When the filler to serve as a base substance has multiple such amino groups, at least one of the multiple amino groups is preferably a heterocyclic amino group, and the filler more preferably has a primary or secondary amino group (aliphatic, aromatic, or heterocyclic amino group).
The kind and grade of the amino group can be arbitrarily adjusted depending on physical properties requested for a composition.

The amino group-introduced filler can be obtained by introducing the amino group into the filler to serve as a base substance.
A method of introducing the amino group is not particularly limited, and specific examples thereof include surface treatment methods (such as a surface modification method and a surface coating method) to be generally used for various fillers, reinforcing agents, and the like. Examples of a preferable method include: a method causing a compound having a functional group capable of reacting with the filler to serve as a base substance and the amino group to react with the filler (a surface modification method); a method involving coating the surface of the filler to serve as a base substance with a polymer having the amino group (a surface coating method); and a method involving causing, for example, a compound having the amino group to react in the course of the synthesis of the filler.

Each of such amino group-introduced fillers may be used alone, or two or more of them may be used in combination. A mixing ratio when two or more of them are used in combination can be an arbitrary ratio depending on, for example, applications where the thermoplastic elastomer composition is used and physical properties requested for the thermoplastic elastomer composition.
The content of the amino group-introduced filler(s) is preferably 1 to 200 parts by mass, more preferably 10 parts by mass or more, or particularly preferably 30 parts by mass or more with respect to 100 parts by mass of the thermoplastic elastomer composition.

Description will be given of the amino group-containing compound except the amino group-introduced filler.
An amino group in the amino group-containing compound is basically identical to that described with regard to the amino group-introduced filler. In addition, the number of amino groups in the compound is not particularly limited as long as the number is 1 or more, and is preferably 2 or more because the compound can form 2 or more crosslinkages with the thermoplastic elastomer to provide excellent improving effects on physical properties.

As in the case of the amino group in the amino group-introduced filler described above, the amino group in the amino group-containing compound may be any one of the primary (-NH₂), secondary (an imino group or >NH), tertiary (>N-), and quaternary (>N⁺<) amino groups without any particular limitation, and any one of the primary to quaternary amino groups can be selected depending on physical properties (such as recycling property, a compression set, mechanical strength, and hardness) requested for the thermoplastic elastomer composition.
When a secondary amino group is selected, mechanical strength tends to be excellent. When a tertiary amino group is selected, recycling property tends to be excellent. In particular, the amino group-containing compound preferably has two secondary amino groups because the recycling property and compression set of the thermoplastic elastomer composition to be obtained are excellent and a balance between both the physical properties is also excellent.
When the amino group-containing compound contains 2 or more amino groups, the number of primary amino groups in the amino group-containing compound is preferably 2 or less, or more preferably 1 or less. When the compound has 3 or more primary amino groups, bonds (crosslinkages) to be formed by the amino groups and the functional groups (especially a carboxy group as a carbonyl-containing group) in the thermoplastic elastomer become strong, so excellent recycling property is impaired in some cases.

In other words, the grades and number of amino groups, and the structure of the amino group-containing compound can be appropriately adjusted and selected in consideration of, for example, a bonding force between a functional group in the thermoplastic elastomer and an amino group in the amino group-containing compound.

Specific preferable examples of such amino group-containing compound include: a secondary aliphatic diamine such as N,N'-dimethylethylenediamine, N,N'-diethylethylenediamine, N,N'-diisopropylethylenediamine, N,N'-dimethyl-1,3-propanediamine, N,N'-diethyl-1,3-propanediamine, N,N'-diisopropyl-1,3-propanediamine, N,N'-dimethyl-1,6-hexanediamine, N,N'-diethyl-1,6-hexanediamine, or N,N',N"-trimethylbis(hexamethylene)triamine; a tertiary aliphatic diamine such as tetramethyl-1,6-hexanediamine; a polyamine containing an aromatic primary amine and a heterocyclic amine such as aminotriazole or aminopyridine; a linear alkyl monoamine such as dodecylamine; and a tertiary heterocyclic diamine such as dipyridyl. Each of them has high improving effects on a compression set, mechanical strength, and the like.
Of those, a secondary aliphatic diamine, a polyamine containing an aromatic primary amine and a heterocyclic amine, or a tertiary heterocyclic diamine is more preferable.

Except those exemplified above, a high molecular weight compound having an amino group can be used as the amino group-containing compound.

The high molecular weight compound having an amino group is not particularly limited, and specific examples thereof include: polymers such as polyamide, polyurethane, a urea resin, a melamine resin, polyvinylamine, polyallylamine, polyacrylamide, polymethacrylamide, polyaminostyrene, and amino group-containing polysiloxane; and polymers obtained by denaturing various with compounds each having an amino group.
The average molecular weight, molecular weight distribution, and physical properties such as viscosity of each of those polymers are not particularly limited, and can be arbitrary ones depending on, for example, applications where the thermoplastic elastomer composition is used and physical properties requested for the thermoplastic elastomer composition.

In addition, the high molecular weight compound having an amino group is preferably a polymer obtained through the polymerization (polyaddition or polycondensation) of a condensable or polymerizable compound (monomer) having an amino group, and is more preferably polysiloxane having an amino group as a homopolycondensate of a silyl compound having a hydrolyzable substituent and an amino group or as a copolycondensate of the silyl compound and a silyl compound having no amino group because it is readily available and can be easily produced, and its molecular weight, its introduction ratio of an amino group, and the like can be easily adjusted.

The silyl compound having a hydrolyzable substituent and an amino group is not particularly limited, and an example thereof includes an aminosilane compound. Specific examples thereof include: an aminosilane compound having an aliphatic primary amino group such as γ-aminopropyltrimethoxysilane, γ-aminopropyltriethoxysilane, γ-aminopropylmethyldimethoxysilane, γ-aminopropylmethyldiethoxysilane, or 4-amino-3,3-dimethylbutyltrimethoxysilane (each of which is manufactured by Nippon Unicar Co., Ltd.); an aminosilane compound having an aliphatic secondary amino group such as N,N-bis[(3-trimethoxysilyl)propyl]amine, N,N-bis[(3-triethoxysilyl)propyl]amine, N,N-bis[(3-tripropoxysilyl)propyl]amine (each of which is manufactured by Nippon Unicar Co., Ltd.), 3-(n-butylamino)propyltrimethoxysilane [Dynasilane 1189 (manufactured by Daicel-Degussa Ltd.)], or N-ethylaminoisobutyltrimethoxysilane (Silquest A-Link 15 silane, manufactured by OSi Specialities, Inc.); an aminosilane compound having aliphatic primary and secondary amino groups such as N-β(aminoethyl)γ-aminopropylmethyldimethoxysilane, N-β(aminoethyl)γ-aminopropyltrimethoxysilane, or N-β(aminoethyl)γ-aminopropyltriethoxysilane (manufactured by Nippon Unicar Co., Ltd.); an aminosilane compound having an aromatic secondary amino group such as N-phenyl-γ-aminopropyltrimethoxysilane (manufactured by Nippon Unicar Co., Ltd.); and imidazoletrimethoxysilane (manufactured by JAPAN ENERGY CORPORATION) or an aminosilane compound having a heterocyclic amino group such as triazolesilane obtained by causing or aminotriazole and an epoxysilane compound, an isocyanatesilane compound, or the like to react with each other in the presence or absence of a catalyst at a temperature equal to or higher than room temperature. Of those, an aminoalkylsilane compound of any one of the above-described aminosilane compound having an aliphatic primary amino group, aminosilane compound having an aliphatic secondary amino group, and aminosilane compound having aliphatic primary and secondary amino groups is preferable because it has high improving effects on physical properties such as a compression set.

The silyl compound having no amino group is not particularly limited as long as it is a compound different from the silyl compound having a hydrolyzable substituent and an amino group and contains no amino group, and specific examples thereof include an alkoxysilane compound and a halogenated silane compound. Of those, an alkoxysilane compound is preferable because it is readily available, can be easily handled, and provides a copolycondensate to be obtained with excellent physical properties.
Specific examples of the alkoxysilane compound include tetramethoxysilane, tetraethoxysilane, tetrabutoxysilane, tetraisopropoxysilane, methyltrimethoxysilane, methyltriethoxysilane, methyltributoxysilane, methyltriisopropoxysilane, phenyltrimethoxysilane, and dimethyldimethoxysilane.
Specific examples of the halogenated silane compound include tetrachlorosilane and vinyltrifluorosilane.
Of those, tetraethoxysilane or tetramethoxysilane is preferable because, for example it is inexpensive and can be safely handled.

One kind of silyl compound having a hydrolyzable substituent and an amino group or of silyl compound having no amino group may be used alone, or two or more kinds thereof may be used in combination.

One of such high molecular weight compounds each having an amino group may be used alone, or two or more of them may be used in combination. A mixing ratio when two or more of them are used in combination can be an arbitrary ratio depending on, for example, applications where the thermoplastic elastomer composition is used and physical properties requested for the thermoplastic elastomer composition.

In addition, as in the case of the amino group-containing compound, the content of the high molecular weight compound having an amino group can be specified depending on the number of nitrogen atoms (equivalents) in the compound with respect to a side chain of the thermoplastic elastomer. However, in some cases, an amino group is present, which is unable to effectively interact with the thermoplastic elastomer depending on the structure, molecular weight, and the like of the polymer compound.
Accordingly, the content of the high molecular weight compound having an amino group is preferably 1 to 200 parts by mass, more preferably 5 parts by mass or more, or particularly preferably 10 parts by mass or more with respect to 100 parts by mass of the thermoplastic elastomer.

The metal salt is not particularly limited as long as it is a compound containing at least one metal element, and is preferably a compound containing one or more kinds of metal elements selected from the group consisting of Li, Na, K, Ti, V, Cr, Mn, Fe, Co, Ni, Cu, Zn, Ga, and Al.
Specific examples of the metal salt include a saturated aliphatic acid salt having 1 to 20 carbon atoms (such as a formate, an acetate, or a stearate), an unsaturated aliphatic acid salt such as (meth)acrylate, a metal alkoxide (a reactant with an alcohol having 1 to 12 carbon atoms), a nitrate, a carbonate, a bicarbonate, a chloride, an oxide, a hydroxide, and a complex with a diketone each containing one or more kinds of those metal elements.
The term "complex with a diketone" as used herein refers to a complex in which 1,3-diketone (such as acetylacetone) or the like coordinates with a metal atom.

Of those, Ti, Al, or Zn is a preferable metal element because it additionally improves the compression set of the thermoplastic elastomer composition to be obtained. The metal salt is preferably the saturated aliphatic acid salt having 1 to 20 carbon atoms (such as an acetate or a stearate), metal alkoxide (a reactant with an alcohol having 1 to 12 carbon atoms), oxide, hydroxide, or complex with a diketone of any such metal element, and is particularly preferably the saturated aliphatic acid salt having 1 to 20 carbon atoms (such as a stearate), metal alkoxide (a reactant with an alcohol having 1 to 12 carbon atoms), or complex with a diketone thereof.

One of such metal salts may be used alone, or two or more of them may be used in combination. A mixing ratio when two or more of them are used in combination can be an arbitrary ratio depending on, for example, applications where the thermoplastic elastomer composition is used and physical properties requested for the thermoplastic elastomer composition.

The content of the metal salt(s) is preferably 0.05 to 1.5 equivalents, more preferably 0.1 to 1.0 equivalent, or particularly preferably 0.2 to 1.0 equivalent with respect to a carbonyl group present in the thermoplastic elastomer. The content of the metal salt is preferably within the range because the physical properties (such as a compression set, mechanical strength, and hardness) of the thermoplastic elastomer composition to be obtained are improved.

In addition, the metal salt may be, for example, any one of all possible hydroxides, metal alkoxides, and carboxylates of a certain metal. For example, when iron is used as the metal, each of its hydroxides, that is, Fe(OH)₂ and Fe(OH)₃ may be used alone, or they may be used in combination.
Furthermore, as described above, the metal salt is preferably a compound containing one or more kinds of metal elements selected from the group consisting of Li, Na, K, Ti, V, Cr, Mn, Fe, Co, Ni, Cu, Zn, Ga, and Al, but may contain a metal element except these elements to the extent that an effect of the present invention is not impaired. The content of the metal element except those elements is not particularly limited, but is, for example, preferably 1 to 50 mol% with respect to all metal elements in the metal salt.

The term "maleic anhydride-modified polymer" refers to a polymer obtained by denaturing the elastomeric polymer with maleic anhydride. The maleic anhydride- modified polymer may have a maleic anhydride residue and a functional group except a nitrogen-containing heterocyclic ring at side chains thereof, but preferably has only a maleic anhydride residue.

The side chain or terminal of the elastomeric polymer has the maleic anhydride residue introduced thereinto (modified therewith), and the residue is not introduced into the main chain of the elastomeric polymer. In addition, the maleic anhydride residue is a cyclic acid anhydride group, and its cyclic acid anhydride group (portion) does not undergo ring-opening.
Therefore, an example of the maleic anhydride-modified thermoplastic polymer includes a thermoplastic elastomer having a cyclic acid anhydride group at a side chain thereof and having no nitrogen-containing heterocyclic ring obtained through a reaction between an ethylenically unsaturated bond portion of maleic anhydride and an elastomeric polymer as shown in the following formula (9). Specific examples of such thermoplastic elastomer include the carbonyl-containing group- modified elastomers exemplified above.

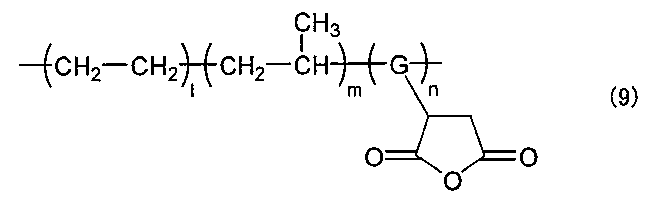

(In the formula, G represents an ethylene residue or a propylene residue, and 1, m, and n each independently represent a number of 0.1 to 80.)

The amount of maleic anhydride with which elastomeric polymer is modified is preferably 0.1 to 50 mol%, more preferably 0.3 to 30 mol%, or particularly preferably 0.5 to 10 mol% with respect to 100 mol% of the main chain portion of the elastomeric polymer because a compression set can be improved without any impairment of excellent recycling property.

Each of such maleic anhydride- modified polymers may be used alone, or two or more of them may be used in combination. A mixing ratio when two or more of them are used in combination can be an arbitrary ratio depending on, for example, applications where the thermoplastic elastomer composition is used and physical properties requested for the thermoplastic elastomer composition.

The content of the maleic anhydride-modified polymer is preferably 1 to 100 parts by mass, or more preferably 5 to 50 parts by mass with respect to 100 parts by mass of the thermoplastic elastomer. The content of the maleic anhydride- modified polymer is preferably within the range because the processability and mechanical strength of the thermoplastic elastomer composition to be obtained are improved.

Specific examples of the age inhibitor include hindered phenol compounds, and aliphatic and aromatic hindered amine compounds.
Specific examples of the antioxidant include butylated hydroxytoluene (BHT) and butylated hydroxyanisole (BHA).
Specific examples of the pigment include: inorganic pigments such as titanium dioxide, zinc oxide, ultramarine blue, blood red, lithophone, lead, cadmium, iron, cobalt, aluminum, a hydrochloride, and a sulfate; and organic pigments such as an azo pigment and a copper phthalocyanine pigment.

Specific examples of the plasticizer include: derivatives of benzoic acid, phthalic acid, trimellitic acid, pyromellitic acid, adipic acid, sebacic acid, fumaric acid, maleic acid, itaconic acid, and citric acid; and polyester, polyether, and epoxy plasticizers.
Specific examples of the thixotropy imparting agent include bentonite, silicic anhydride, a silicic acid derivative, and a urea derivative.
Specific examples of the UV absorber include 2-hydroxybenzophenone, benzotriazole, and salicylate UV absorbers.
Specific examples of the flame retardant include: phosphorus flame retardants such as TCP; halogen flame retardants such as chlorinated paraffin and perchlorpentacyclodecane; antimony flame retardants such as antimony oxide; and aluminum hydroxide.

Specific examples of the solvent include: hydrocarbon solvents such as hexane and toluene; halogenated hydrocarbon solvents such as tetrachloromethane; ketone solvents such as acetone and methyl ethyl ketone; ether solvents such as diethyl ether and tetrahydrofuran; and ester solvents such as ethyl acetate.
Specific examples of the surfactant (leveling agent) include polybutyl acrylate, polydimethylsiloxane, a denatured silicone compound, and a fluorine surfactant.
A specific example of the dehydrating agent includes vinylsilane.

Specific examples of the rust inhibitor include zinc phosphate, tannic acid derivatives, phosphates, basic sulfonates, and various rust-proof pigments.
Specific examples of the adhesiveness imparting agent include a conventionally known silane coupling agent, a silane compound having an alkoxysilyl group, a titanium coupling agent, and a zirconium coupling agent. More specific examples thereof include trimethoxyvinylsilane, vinyltriethoxysilane, vinyltris(2-methoxyethoxy)silane, γ-methacryloxypropyltrimethoxysilane, and 3-glycidoxypropyltrimethoxysilane.
General examples of the antistatic agent include: a quaternary ammonium salt; and a hydrophilic compound such as polyglycol or an ethylene oxide derivative.

The content of a plasticizer is preferably 0.1 to 50 parts by mass, or more preferably 1 to 30 parts by mass with respect to 100 parts by mass of the thermoplastic elastomer. The total content of the other additives is preferably 0.1 to 10 parts by mass, or more preferably 1 to 5 parts by mass with respect to 100 parts by mass of the thermoplastic elastomer.

The thermoplastic elastomer is self-crosslinkable in some cases, but may be used in combination with a vulcanizer, a vulcanization assistant, a vulcanization accelerator, a vulcanization retardant, or the like as in the case of the vulcanized rubber composition described above to the extent that the effect of the present invention is not impaired.

A method of producing the thermoplastic elastomer composition is not particularly limited, and an example of a desirable method involves mixing the thermoplastic elastomer, various additives that may be incorporated as required, and the like by means of a roll, a kneader, an extruder, a universal stirring machine, or the like.

Curing conditions under which the thermoplastic elastomer composition is permanently crosslinked (by using a vulcanizer) can be appropriately selected in accordance with various components to be blended and the like, and are not particularly limited. Preferable curing conditions include a temperature of 130 to 200°C and a time of 5 to 60 minutes.

The thermoplastic elastomer (composition) softens upon heating to about 80 to 200°C as a result of the dissociation of its three-dimensional crosslinkage (crosslinked structure), whereby fluidity is imparted to the elastomer (composition). This is probably because an intermolecular or intramolecular interaction between side chains is weakened.
When the thermoplastic elastomer (composition) which has softened and to which fluidity has been imparted is left at a temperature of about 80°C or lower, the dissociated three-dimensional crosslinkage (crosslinked structure) binds again to cure the elastomer. The repetition of the above series of operations causes the thermoplastic elastomer (composition) to exert recycling property.

The use of such thermoplastic elastomer composition for the adhesion between members each composed of a vulcanized rubber composition is very useful because the facilitates the dimantling of an adhesion portion to make it possible to maintain recycling property and provides excellent adhesiveness.

### Examples

Next, the present invention will be described more specifically by way of examples. However, the present invention is not limited to these examples.

### <Preparation of thermoplastic elastomer composition>

300.0 g of maleic anhydride-modified EPM (Toughmer MP0620, ethylene content 70 mass%, manufactured by Mitsui Chemicals, Inc.) were added to a press kneader heated to 190°C, and were masticated for 1 to 5 minutes. After that, 2.49 g (0.03 mol) of 3-amino-1,2,4-triazole were added, and the whole was kneaded for 20 minutes to prepare a thermoplastic elastomer A. The analysis of an IR spectrum confirmed that the resultant thermoplastic elastomer A was a polymer having a triazole ring introduced thereinto.
10 parts by mass of carbon black (Seast V, manufactured by Mitsubishi Chemical Corporation) were added to 100 parts by mass of the resultant thermoplastic elastomer A, and the whole was sufficiently kneaded by means of a banbury mixer until it became uniform, to thereby prepare a thermoplastic elastomer composition A.

### <Preparation of vulcanized rubber composition>

### (1) Vulcanized rubber composition A

Carbon black (a filler), oil (a softener), zinc oxide (a vulcanization assistant), stearic acid (a vulcanization assistant), sulfur (a vulcanizer), and Nocceler (a vulcanization accelerator) were added in compositions (parts by mass) shown in Table 1 below to 100 parts by mass of EPDM, and the whole was uniformly dispersed by means of a banbury mixer. EP 57 (ethylene content 56 mass%, manufactured by JSR Co.,Ltd.) was used for EPDM.
The resultant vulcanized rubber composition A was pressed under heat at 200°C for 10 minutes (at a pressing pressure of 2 MPa) to produce a vulcanized rubber sheet A (having a thickness of 2 mm and a width of 25 mm).

**Table 1**

| Blend | Trade name (manufacturer) | Loading |
|---|---|---|
| Carbon black | Seast V (manufactured by Mitsubishi Chemical Corporation) | 100 |
| Oil | Process oil (manufactured by Showa Shell Sekiyu K.K.) | 50 |
| Zinc oxide | Zinc oxide No. 3 (manufactured by Seido Chemical Industry Co., Ltd.) | 5 |
| Stearic acid | Beads stearic acid (manufactured by NOF CORPORATION) | 1 |
| Sulfur | Oil-treated sulfur (manufactured by Hosoi Chemical Industry Co., Ltd.) | 1 |
| Vulcanization accelerator | Nocceler NS-P (manufactured by OUCHISHINKO CHEMICAL INDUSTRIAL CO., LTD.) | 3.5 |

### (2) Vulcanized rubber composition B

A vulcanized rubber composition B and a vulcanized rubber sheet B were produced in the same manner as that described above except that EP 24 (ethylene content 49 mass%, manufactured by JSR Co.,Ltd.) was used for EPDM.

### (3) Vulcanized rubber composition C

A vulcanized rubber composition C and a vulcanized rubber sheet C were produced in the same manner as that described above except that EP 27 (ethylene content 44 mass%, manufactured by JSR Co.,Ltd.) was used for EPDM.

### (Example 1)

Two sheets of the resultant vulcanized rubber sheets A were arranged on left and right sides so as to be symmetric with respect to each other with a gap (5 mm) therebetween. The thermoplastic elastomer composition A (3 mm in thickness) having the same width as that of the gap was arranged to prepare a test piece having the vulcanized rubber sheets A and the thermoplastic elastomer composition A arranged in a row.
The test piece having the sheets and the composition arranged in a row was pressed from above at 170°C for 5 minutes (at a presuring pressure of 2 MPa) to produce a sheet-like vulcanized rubber molded product (having a thickness of 2 mm and a width of 25 mm).

### (Comparative Example 1)

A sheet-like vulcanized rubber molded product was produced in the same manner as in Example 1 except that an unvulcanized EPDM sheet (3 mm in thickness) was used instead of the thermoplastic elastomer composition A.
Thus, a sheet-like vulcanized rubber molded product adhered by means of EPDM which had been vulcanized (vulcanized EPDM) instead of a thermoplastic elastomer was produced.

### (Comparative Example 2)

A sheet-like vulcanized rubber molded product was produced in the same manner as in Example 1 except that an IR thermoplastic elastomer composition (an IR composition) was used instead of the thermoplastic elastomer composition A.
The IR thermoplastic elastomer composition was produced according to the following synthesis method. First, 300 g of Nipol IR-2200 (manufactured by ZEON CORPORATION) and 50 g of maleic anhydride were mixed by means of a press kneader at 210°C for 40 minutes to synthesize a maleinized IR. 5.8 g (0.07 mol) of 3-amino-1,2,4-triazole were added to the IR, and the whole was kneaded for 20 minutes to prepare an IR thermoplastic elastomer. The analysis of an IR spectrum confirmed that the resultant IR thermoplastic elastomer was a polymer having a triazole ring introduced thereinto. 10 parts by mass of carbon black (Seast V, manufactured by Mitsubishi Chemical Corporation) were added to 100 parts by mass of the resultant IR thermoplastic elastomer, and the whole was sufficiently kneaded by means of a banbury mixer until it became uniform, to thereby prepare the IR thermoplastic elastomer composition.

### <Breaking strength>

Each of the resultant sheet-like vulcanized rubber molded products was stamped into a #3 dumbbell-like test piece in such a manner that the adhesive interface of the vulcanized rubber sheet A would be the center of the dumbbell. A tensile test at a tension speed of 50 mm/min was performed according to JIS K6251 to measure a breaking strength (T_{B}) [MPa] at room temperature (25°C). Table 2 below shows the results.
In Table 2 below, the term "material break" means that the thermoplastic elastomer composition A and the vulcanized EPDM used for adhesion occurs cohesive failure, and the term "interfacial break" means that the interface between the IR thermoplastic elastomer composition and the vulcanized rubber sheet A broke.

### <Recycling property>

Each of the resultant sheet-like rubber molded products was finely cut and subjected to press molding again. The number of times a seamless and integrated sheet was produced was used for evaluation on recycling property.
The case where such sheet was formed 10 or more times was evaluated as "○" and the case where such sheet could not be formed even once was evaluated as "×". Table 2 below shows the results.

**Table 2**

| | Example 1 | Comparative Example 1 | Comparative Example 2 |
|---|---|---|---|
| Adhesion portion | Composition A | Vulcanized EPDM | IR composition |
| Breaking strength (Mpa) | 1.5 (Material break) | 3.1 (Material break) | 0.2 (Interfacial break) |
| Recycling property | ○ | × | ○ |

The results shown in Table 2 above revealed that the adhesion of a vulcanized rubber composition using the thermoplastic elastomer composition A showed a breaking adhesive force of 1 MPa or more and had recycling property. The results also revealed that the adhesion using vulcanized EPDM for an adhesion portion shown in Comparative Example 1 showed a high breaking strength but had no recycling property, and the adhesion using the IR thermoplastic elastomer composition having no monomer unit forming a rubber component of a vulcanized rubber composition shown in Comparative Example 2 showed a remarkable reduction in breaking strength.

### (Examples 2 to 6 and Comparative Example 3)

Next, a change in breaking strength due to a difference in carbon black content between thermoplastic elastomer compositions was examined.
Carbon black (Seast V, manufactured by Mitsubishi Chemical Corporation) was fed in an amount (parts by mass) shown in Table 3 below to the thermoplastic elastomer A, and the whole was sufficiently kneaded by means of a banbury mixer until it became uniform, to thereby prepare a thermoplastic elastomer composition. The thermoplastic elastomer composition prepared in Example 3 was identical to the thermoplastic elastomer composition A prepared in the foregoing.
Each of the resultant thermoplastic elastomer compositions was evaluated for processability in accordance with the method described below. Table 3 below shows the results.

### <Processability>

Carbon black was fed into the thermoplastic elastomer A, and the whole was kneaded by means of a banbury mixer. Whether the elastomer and carbon black agglomerated to be of a massive form or were of particle forms without agglomeration at the time of the kneading was examined. As a result, as shown in Table 3 below, each of Examples 2 to 6 was evaluated as "○" because the elastomer and carbon black were of a massive form. Comparative Example 3 was evaluated as "―" because carbon black was not used.

Each of the resultant thermoplastic elastomer compositions and the vulcanized rubber sheet produced in the foregoing were used to produce a sheet-like vulcanized rubber molded product in the same manner as in Example 1.
Each of the resultant sheet-like vulcanized rubber molded products was evaluated for breaking strength and recycling property by means of the methods described above. Table 3 below shows the results.

**Table 3**

| | Comparative Example 3 | Example 2 | Example 3 | Example 4 | Example 5 | Example 6 |
|---|---|---|---|---|---|---|
| Thermoplastic elastomer A | 100 | 100 | 100 | 100 | 100 | 100 |
| Carbon black | 0 | 5 | 10 | 30 | 50 | 100 |
| Processability | ○ | ○ | ○ | ○ | o | o |
| Breaking strength (Mpa) | 0.7 | 1.2 | 1.5 | 2.0 | 2.4 | 3.4 |
| Recycling property | ○ | ○ | ○ | ○ | ○ | ○ |

The results shown in Table 3 above revealed that the breaking strength can be increased by increasing the content of carbon black to be comparable to that of the vulcanized rubber composition produced in the foregoing.

### (Examples 7 to 9)

Next, a change in breaking strength due to a difference in ethylene content between a thermoplastic elastomer composition and a vulcanized rubber composition was examined.
The thermoplastic elastomer composition A produced in the foregoing was used as a thermoplastic elastomer composition.
Each of the vulcanized rubber compositions A to C (the vulcanized rubber sheets A to C) produced in the foregoing was used as a vulcanized rubber composition.

The resultant thermoplastic elastomer composition A and each of the vulcanized rubber sheets A to C were used to produce a sheet-like vulcanized rubber molded product in the same manner as in Example 1. The sheet-like vulcanized rubber molded product produced in Example 7 is identical to the sheet-like vulcanized rubber molded product produced in Example 1.
The breaking strength of each of the resultant sheet-like vulcanized rubber molded products was measured by means of the method described above. Table 4 below shows the results.

**Table 4**

| | Example 7 | Example 8 | Example 9 |
|---|---|---|---|
| Thermoplastic elastomer composition A Ethylene content (mass%) | 70 | 70 | 70 |
| Vulcanized rubber composition A Ethylene content (mass%) | 56 | | |
| Vulcanized rubber composition B Ethylene content (mass%) | | 49 | |
| Vulcanized rubber composition C Ethylene content (mass%) | | | 40 |
| Difference in ethylene content (mass%) | 14 | 21 | 26 |
| Breaking strength (Mpa) | 1.5 | 1.1 | 0.9 |

The results shown in Table 4 above revealed that a difference in ethylene content (mass%) of 25 mass% or less provides a more excellent breaking strength.

### (Example 10)

A state was held, in which two sheets of the resultant vulcanized rubber sheets A were arranged on left and right sides so as to be symmetric with respect to each other with a gap (3 mm) therebetween. The gap was filled with the thermoplastic elastomer composition A turned in a molten state by means of an injection molding machine (J110ELIII, manufactured by NIPPON STEEL WORKS,LTD.) at an injection pressure of 4 MPa. After the filling, the resultant was cooled to room temperature while a pressure was applied thereto, to thereby produce a sheet-like vulcanized rubber molded product (having a thickness of 2 mm, a width of 25 mm, and a length of 80 mm).
The resultant sheet-like vulcanized rubber molded product was evaluated for breaking strength and recycling property by means of the methods described above. Table 5 below shows the results.

**Table 5**

| | Example 10 |
|---|---|
| Adhesion portion | Composition A |
| Breaking strength (Mpa) | 1.6 (Material break) |
| Recycling property | ○ |

The results shown in Table 5 above revealed that even the adhesion of a vulcanized rubber composition through injection using the thermoplastic elastomer composition A shows a breaking adhesive force of 1 MPa or more and has recycling property.

## Claims

1. A method of adhering a vulcanized rubber composition using a thermoplastic elastomer composition, wherein the thermoplastic elastomer composition containing a thermoplastic elastomer and a filler, and the thermoplastic elastomer having: a monomer unit forming a rubber component of the vulcanized rubber composition on at least part of its main chain; and a side chain containing a structure represented by the following formula (1) and/or a nitrogen-containing heterocyclic ring, the method comprising adhering a first member and a second member each composed of the vulcanized rubber composition through the thermoplastic elastomer composition: 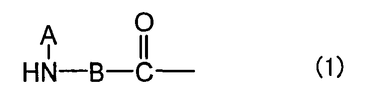 (wherein A represents an alkyl group having 1 to 30 carbon atoms, an aralkyl group having 7 to 20 carbon atoms, or an aryl group having 6 to 20 carbon atoms, and B represents: a single bond; an oxygen atom, an amino group NR' (R' represents a hydrogen atom or an alkyl group having 1 to 10 carbon atoms.), or a sulfur atom; or an organic group which may contain any one of these atoms or groups).

2. The method of adhering a vulcanized rubber composition according to claim 1, wherein the adhesion is performed by:
applying the thermoplastic elastomer composition in a state of being molten to a surface/surfaces of the first member and/or the second member to be adhered; and subjecting a resultant to contact bonding.

3. The method of adhering a vulcanized rubber composition according to claim 1, wherein the adhesion is performed by injecting or extruding the thermoplastic elastomer composition in a state of being molten into a space between the first member and the second member.

4. The method of adhering a vulcanized rubber composition according to claim 1, wherein the adhesion is performed by:
sandwiching a sheet-like product composed of the thermoplastic elastomer composition between the surfaces of the first member and the second member to be adhered; and
subjecting a resultant to contact bonding under heat at a temperature equal to or higher than a temperature at which the sheet-like product melts.

5. The method of adhering a vulcanized rubber composition according to any one of claims 1 to 4, wherein the side chain containing a structure represented by the formula (1) contains a structure represented by the following formula (2) or (3) that binds to a main chain at a position α or β: 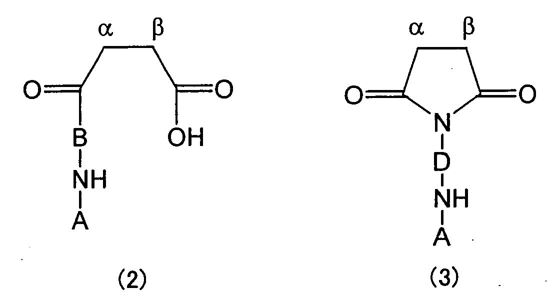 (wherein A represents an alkyl group having 1 to 30 carbon atoms, an aralkyl group having 7 to 20 carbon atoms, or an aryl group having 6 to 20 carbon atoms, and B and D each independently represent: a single bond; an oxygen atom, an amino group NR' (R' represents a hydrogen atom or an alkyl group having 1 to 10 carbon atoms.), or a sulfur atom; or an organic group which may contain any one of these atoms or groups).

6. The method of adhering a vulcanized rubber composition according to any one of claims 1 to 5, wherein the side chain containing a nitrogen-containing heterocyclic ring contains a structure represented by the following formula (4) : 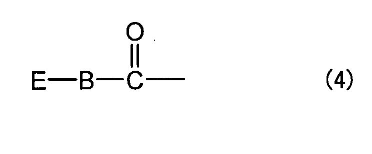 [wherein E represents a nitrogen-containing heterocyclic ring, and B represents: a single bond; an oxygen atom, an amino group NR' (R' represents a hydrogen atom or an alkyl group having 1 to 10 carbon atoms.), or a sulfur atom; or an organic group which may contain any one of these atoms or groups].

7. The method of adhering a vulcanized rubber composition according to claim 6, wherein the side chain containing a nitrogen-containing heterocyclic ring contains a structure represented by the following formula (5) or (6) that binds to a main chain at a position α or β: 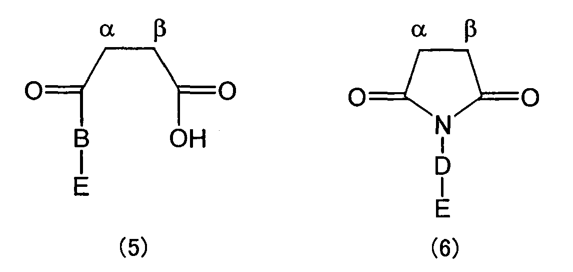 [wherein E represents a nitrogen-containing heterocyclic ring, and B and D each independently represent: a single bond; an oxygen atom, an amino group NR' (R' represents a hydrogen atom or an alkyl group having 1 to 10 carbon atoms.), or a sulfur atom; or an organic group which may contain any one of these atoms or groups].

8. The method of adhering a vulcanized rubber composition according to any one of claims 1 to 7, wherein the nitrogen-containing heterocyclic ring comprises a five- or six-membered ring.

9. The method of adhering a vulcanized rubber composition according to claim 8, wherein the nitrogen-containing heterocyclic ring comprises a triazole ring, a thiadiazole ring, a thiazole ring, a pyridine ring, an imidazole ring, or a hydantoin ring.

10. The method of adhering a vulcanized rubber composition according to any one of claims 1 to 9, wherein the monomer unit forming a rubber component of the vulcanized rubber composition has at least one kind selected from the group consisting of ethylene, propylene, isoprene, and butadiene, and has a unit similar to the at least one kind on at least part of the main chain of the thermoplastic elastomer.

11. The method of adhering a vulcanized rubber composition according to claim 10, wherein:
the rubber component of the vulcanized rubber composition comprises an ethylene-propylene-nonconjugated diene terpolymer (EPDM); and
the thermoplastic elastomer has an ethylene unit and a propylene unit on at least part of its main chain.

12. The method of adhering a vulcanized rubber composition according to claim 11, wherein an elastomeric polymer constituting the main chain of the thermoplastic elastomer comprises an ethylene-propylene copolymer (EPM) or an ethylene-propylene- nonconjugated diene terpolymer (EPDM), or a mixture of them.

13. The method of adhering a vulcanized rubber composition according to any one of claims 1 to 12, wherein a difference between an ethylene content (mass%) of the rubber component of the vulcanized rubber composition and an ethylene content (mass%) of the thermoplastic elastomer is 25 mass% or less.

14. The method of adhering a vulcanized rubber composition according to any one of claims 1 to 13, wherein the thermoplastic elastomer composition contains 1 to 100 parts by mass of the filler with respect to 100 parts by mass of the thermoplastic elastomer.
